# EUROPEAN PATENT SPECIFICATION

(11) **EP 2 249 658 B1**
(45) Date of publication and mention of the grant of the patent: **07.09.2011**
(21) Application number: 09714487.7
(22) Date of filing: 07.02.2009
(51) Int. Cl.: A23G 3/00, A23L 1/00, A23G 4/06

(54) **COATED COMESTIBLES AND PROCESSES FOR THEIR PREPARATION**
BESCHICHTETE ESSWAREN UND VERFAHREN ZU IHRER HERSTELLUNG
PRODUITS COMESTIBLES REVÊTUS ET PROCÉDÉS POUR LEUR PRÉPARATION

(30) Priority: 25.02.2008 US 36400; 04.04.2008 US 98048
(43) Date of publication of application: 17.11.2010
(73) Proprietor: Südzucker Aktiengesellschaft Mannheim/Ochsenfurt, 68165 Mannheim (DE)
(72) Inventor: HASSLINGER, Bernd, 67316 Carlsberg (DE); KOWALCZYK, Jörg, 67304 Eisenberg/Steinborn (DE); WILLIBALD-ETTLE, Ingrid, 76829 Landau (DE); PETERS, Siegfried, 68647 Biblis (DE)
(74) Representative: Schrell, Andreas
(86) International application number: PCT/EP2009/000869
(87) International publication number: WO 2009/106218

(56) References cited:
- WO-A-00/38532
- WO-A-02/21937
- WO-A-2006/094685
- US-A- 5 292 536
- US-A- 5 536 511
- US-A1- 2001 006 690
- US-A1- 2002 113 632
- US-A1- 2005 008 747

## Description

### Technical Field

The present invention relates to improved methods to prepare palatinose-containing comestibles, in particular to prepare coated comestibles, and to the products obtained thereby.

### Background of the Invention

It is well know in the art to provide various comestibles which are embedded in hard or soft coatings. Coatings of such comestibles are frequently used to provide the comestibles with specific functions and properties, such as specifically desired organoleptical characteristics, technological properties and/or a particular optical appearance. It is furthermore well known to apply to sugarless or sugar-containing comestibles sugarless or sugar-containing coatings. As sugarless coatings, coatings made from polyols, such as isomalt, xylitol, sorbitol or maltitol are preferred, while for sugar-containing coatings, sucrose is preferred. In the coating processes of the art, the cores to be coated are provided, the polyol or sugar is added in a liquid medium, applied to the cores and dried. In some cases, after the application of the liquid medium to the cores, powdered dry charges are applied to facilitate a more speedy drying and a different coating characteristic.

WO 92/22217 discloses chewing gums, which comprise palatinose, which is also termed isomaltulose. Palatinose is akariogen, does not cause gastrointestinal disturbances, has a sweetening power comparable to conventional polyols and is only slowly degraded in the gastrointestinal tract. The document discloses the use of palatinose in chewing gum centers as well as in their coatings. Since palatinose tends to crystallize out, in particular in form of a monohydrate, palatinose coated comestibles tend to show the phenomenon of chipping. Chipping describes the process of a partial destruction or damage of the coating, when exposed to mechanical stress, for instance during packaging or transportation. Furthermore, known palatinose coated products which are colored display an uneven and mottled distribution of the food color in the coating.

WO 2006/094685 discloses coatings comprising palatinose and cocoa powder.

### Summary of the Invention

Thus, the technical problem underlying the present invention is to provide palatinose coated comestibles, which overcome the above-identified technical problems, in particular to provide palatinose coated comestibles, which coatings are more resistant to chipping, that means which show a more elastic behavior of the coating, and therefore have a reduced tendency to be damaged or destroyed when exposed to mechanical stress. Furthermore, it is another object of the present invention to provide coated comestibles which have a coating that displays a more even and homogenous distribution of food colors contained therein.

The present invention solves said problem by the provision of the teaching of the independent claims. In particular, the present invention solves said problems by providing a process for coating comestibles comprising the steps of
a) providing cores of comestibles to be coated and
b) applying to the cores a first liquid medium comprising palatinose and a binding agent, in particular gum arabic, so as to obtain at least one layer of a first coating, wherein said first coating comprises at least 5 weight-% of the binding agent (based on the total dry weight of the coating) and wherein the binding agent is a water soluble hydrocolloid.

The present invention overcomes the above-identified technical problems by providing a coating of a core of a comestible, which contains a considerably higher amount of a binding agent in combination with palatinose as used before. In particular, it could surprisingly be shown that the use of at least 5 weight-%, preferably 5 to 10 weight-%, of a binding agent (based on the total dry weight of the coating) together with palatinose advantageously and unexpectedly improves the chipping behavior of the coatings, i.e. reduces the extent and frequency of the chipping. In particular, it could be shown that under mechanical stress, in particular mechanical pressure and/or shearing force, the coatings of the present invention remain intact or at least considerably less damaged than palatinose coated products of which the organoleptical and technological properties are comparable, but which have been prepared with less binding agent, in particular less than 5 weight-%. The use of at least 5% binding agent, in particular gum arabic, in combination with palatinose in the coating provides a more elastic coating, avoiding or reducing chipping of the coating. Furthermore, it could be shown that the high amount of binding agent, in particular gum arabic, in the coating combined with palatinose leads to a more homogenous distribution of food colors contained in said coating.

### Detailed Description of Certain Embodiments of the Invention

In the context of the present invention, a comestible is a food, in particular a confectionery product, preferably for human, but also for animal consumption.

In the context of the present invention, a liquid medium is preferably an aqueous coating medium, in particular a solution or suspension of the coating ingredients to be applied to the cores in water.

In a preferred embodiment of the present invention, subsequent to step b) a second liquid medium comprising palatinose and a binding agent, preferably gum arabic, is applied to the first coating in a process step c) so as to obtain at least one layer of a second coating and wherein in the second coating the amount of the binding agent is higher than in the first coating.

The binding agent is preferably gum arabic, gelatine, gum tragacanth, locust bean gum, guar gum, vegetable gums, alginate, maltodextrines, corn syrup, pectin, cellulose-type materials, carboxymethylcellulose, hydroxymethylcellulose, potato starch, corn starch, starch, modified starch, rice starch, xanthan or mixtures thereof.

In a preferred embodiment of the present invention, the binding agent used according to the present invention and used for the first coating is the same as the binding agent used for the second coating. However, it is in another embodiment also foreseen that the binding agent used in the preparation of the first coating is different to the binding agent used for the preparation of the second coating.

In a preferred embodiment of the present invention the amount of the binding agent in the first coating is 5 to 10 weight-%.

In a preferred embodiment of the present invention the amount of the binding agent in the second coating is 11 to 20%.

In a preferred embodiment of the present invention the first liquid medium is free of food colors.

In a preferred embodiment of the present invention the second liquid medium comprises at least one food color.

In a preferred embodiment of the present invention a food color may be a food quality dye, i.e. carotene or TiO₂.

Preferred embodiments for a food color to be used according to the present invention are coloring foodstuffs, preferably black carrot, elderberry, aronia, grape, beetroot, paprika, carrot, turmeric root, spinach, stinging nettle or burnt sugar.

In a further preferred embodiment of the present invention, the food color used is a natural color, preferably carmine, annatto, beta-carotene, lutein, riboflavin, curcumin, copper-chlorophyll, chlorophyll, caramel, vegetable carbon or titanium dioxide.

In another preferred embodiment of the present invention, the food color used is a synthetic color, preferably allura red, carmoisine, amaranth, tartrazine, quinoline yellow, patent blue V, brilliant blue or indigo carmine.

In a preferred embodiment of the present invention the first liquid medium is free of food color, while the second liquid medium contains at least one food color.

In a preferred embodiment of the present invention the process further comprises the steps of
d) evaporating water from the at least one layer of the first coating obtained in step b), preferably by drying, and
e) repeating steps b) and d) to build up more than one layer, for instance 2 to 100, in particular 2 to 50, preferably 20 to 40 layers, of the first coating.

In a preferred embodiment of the present invention the process further comprises the steps of
f) evaporating water from the at least one layer of the second coating obtained in step c), preferably by drying, and
g) repeating steps c) and f) to build up more than one layer, for instance 2 to 100, in particular 2 to 50, preferably 10 to 40 layers, most preferably 10 to 20 layers of the second coating.

In a particularly preferred embodiment of the present invention it is foreseen to provide a process for coating comestibles, which are particularly resistant to chipping by conducting the above-identified coating and evaporation processes in a particularly high number of cycles, that means coating and drying steps, in particular 100 to 200 cycles. In a particularly preferred embodiment, it is therefore foreseen to repeat steps b) and d) 100 to 200 times. In a furthermore preferred embodiment it is foreseen to repeat steps c) and f) 100 to 200 times. In a furthermore preferred embodiment, it is foreseen in a combined embodiment to repeat steps b) and d) 100 to 200 times and c) and f) 100 to 200 times. The use of a high number of cycles allows short drying times, so as to obtain coated products, which do not show a significant crunch and therefore have a reduced hardness so as to avoid chipping. The residual water content of the coated products in a preferred embodiment is slightly higher than when using fewer cycles for the same quantity of coating material. This particular embodiment has the further advantage of showing a reduced stickiness of the coated products on the inner surface of the coating drum and, furthermore, the coated products show a more homogenous distribution of the coating ingredients and smooth surface of its coating and additionally an improved processability for further steps, such as a film-coating application step.

In a preferred embodiment of the present invention, during or after step b) powdered palatinose is applied in a dusting step over the at least one layer of the first coating.

In a preferred embodiment of the present invention during or after step c) powdered palatinose is applied in a dusting step over the at least one layer of the second coating.

In a preferred embodiment of the present invention the process comprises adding powdered palatinose to the at least one layer of the first, or of the second coating or of the first and second coating and repeating steps b), or c) or b) and c) and the subsequent dusting step, i.e. the addition of the powdered palatinose, so as to build up more than one layer of the first and/or second coating.

Thus, the present invention foresees in a preferred embodiment at least one dusting step, according to which after step b), that means after applying a first liquid medium to the core, powdered palatinose is added as a dry charge and the steps of applying a first liquid medium and the powdered palatinose is repeated several times, so as to build up more than one layer of the first coating. In a furthermore preferred embodiment of the present invention, it is foreseen that subsequent to step c) that means after applying the second liquid medium to the core, powdered palatinose is added as a dry charge and the steps of applying a second liquid medium and the powdered palatinose is repeated several times so as to build up more than one layer of the second coating. In a preferred embodiment of the present invention, dry charges are added both after step b) and after step c), preferably repeatedly.

In a preferred embodiment of the present invention the cores of the comestibles are filled chewing gum centers, non-filled chewing gum centers, tablets, soft caramels, hard caramels, chewing candies, boiled candies, chocolate, jelly gums, nuts or marshmallows.

The present invention also relates to coated comestibles comprising a core and a first coating, wherein the first coating comprises palatinose and at least 5 weight-%, preferably 5 to 10 weight-% (based on total dry weight of the first coating) of a binding agent.

In a preferred embodiment of the present invention the coated comestible comprises a first coating comprising palatinose and at least 5 weight-% of a binding agent, preferably 5 to 10 weight-% (based on total dry weight of the first coating) of the binding agent, and a second coating comprising palatinose and a binding agent, preferably 11 to 20 weight-% (based on total dry weight of the second coating) of the binding agent, wherein the amount of the binding agent in the second coating is higher than in the first coating.

In a preferred embodiment of the present invention the first coating is free of food colors, while the second coating comprises at least one food color.

In a preferred embodiment of the present invention, the first coating comprises 10 to 95, preferably 30 to 95, most preferably 40, 50, 60, 70, 80 or 90 to 95% palatinose (based on total dry weight of the first coating).

In a furthermore preferred embodiment of the present invention, the second coating of the present invention comprises 10 to 95, preferably 30 to 89, most preferably 40, 50, 60, 70, 80 or 85 to 89% palatinose (based on total dry weight of the second coating).

In the context of the present invention the combination of weight-percentage values for at least two coating ingredients contained together in a first or second coating add up to 100 weight-% (based on total dry weight of coating).

In a particularly preferred embodiment of the present invention, the coated comestible comprises a core and solely a first coating. In a furthermore, even more preferred embodiment, the coated comestibles of the present invention comprise a core, a first coating and a second coating.

In a preferred embodiment, it is foreseen that the total coating comprising the first and the second coating comprises 40 to 90, preferably 50 to 90, most preferably 60 to 90 weight-% first coating and 10 to 60, preferably 10 to 50 and most preferably 10 to 40 weight-% of the second coating (each based on dry weight of total coating).

In a further preferred embodiment of the present invention, the coating, in particular the first coating, the second coating or the first and second coating comprises in addition to palatinose and the binding agent at least one further panning additive.

In the context of the present invention, a panning additive is any substance which may be added into the coating process to either influence the coating or panning process itself and/or influence product characteristics, which may either be relevant for the process or for the finally obtained product, for instance its organoleptic, sensoric, physiological, storage or optical behavior.

In a preferred embodiment of the present invention, the first, the second or the first and second coating each comprises 1 to 60 weight-%, preferably 1 to 45 weight-% (based on total dry weight of the first or second coating) of the at least one panning additive.

In a preferred embodiment of the present invention, the first, the second or the first and second coating each comprises 1 to 30 weight-%, preferably 1 to 20 weight-% of the at least one panning additive (based on total dry weight of the first or second coating).

In a preferred embodiment of the present invention, the first coating comprises 30 to 90 weight-% palatinose (based on total dry weight of the first coating).

In a preferred embodiment of the present invention, the first coating comprises 5 to 8 weight-% binding agent (based on total dry weight of the first product coating).

In a preferred embodiment of the present invention, the comestible comprises a core and a first coating, wherein the first coating comprises 5 to 10 weight-% binding agent, 25 to 95 weight-% palatinose and 0 to 70 weight-%, preferably 1 to 70 weight-% (each based on dry weight of the first coating and all constituents adding up to 100% total weight of first coating) of at least one panning additive.

In a preferred embodiment of the present invention, the comestible comprises a core, a first coating and a second coating, wherein the first coating comprises 5 to 10 weight-% binding agent, 25 to 95 weight-% palatinose and 0 to 70 weight-% (each based on dry weight of the first coating and all constituents adding up to 100% total weight of first coating) of at least one panning additive and the second coating comprises 11 to 20 weight-% binding agent, 25 to 89 weight-% of palatinose and 0 to 70 weight-%, preferably 1 to 70 weight-% (each based on total dry weight of second coating and all constituents adding up to 100% total weight of second coating) of at least one panning additive.

In a preferred embodiment of the present invention, the second coating comprises 30 to 90 weight-% palatinose (based on total dry weight of the second coating).

In a preferred embodiment of the present invention, the second coating comprises 13 to 17 weight-% binding agent (based on total dry weight of the second product coating).

In a preferred embodiment of the present invention, the at least one panning additive is selected from groups consisting of calcium carbonate, polyol, leucrose, sugar alcohol, rice starch, SiO₂, magnesium carbonate, high intensity sweetener, flavoring, aroma, colorant, preserving agent, mineral salt, emulsifier, vitamin, active pharmaceutical ingredients and talc.

It is also possible according to the present invention in one embodiment that the panning additive is a conventional sugar, such as sucrose, fructose or glucose.

Most preferably, however, the present invention relates to a comestible or a coating thereof which is free of sucrose or free of fructose or free of glucose or free of both or all of them.

It is preferred according to the present invention, that the first coating, the second coating and preferably both coatings comprise palatinose as the only sugar.

It is furthermore preferred according to the present invention, that the first coating, the second coating or the first and second coating comprise palatinose as the only sweetening agent providing a sweetening power and body to the coating. Thus, in a preferred embodiment of this embodiment of the present invention, the first coating, the second coating or the first and second coating comprise palatinose and at least one intensive sweetener as the only sweetening agents.

It is also preferred according to the present invention that the palatinose contained in the first coating, in the second coating, or in the first and second coating is the only sweetening agent present at all in the first coating, the second coating or the first and second coating.

In another preferred embodiment of the present invention, the first coating, the second coating or the first and second coating comprise palatinose and a non-sugar further sweetening agent, such as a sugar-alcohol and/or a high intensity sweetener as the only sweetening agents contained in the coating.

In a preferred embodiment of the present invention, the first, second or first and second coating comprises at least one high intensity sweetener as a panning additive.

In a preferred embodiment of the present invention, the first and/or second coating comprises a high intensity sweetener selected from the group consisting of thaumatin, stevioside, rebaudioside A, neohesperidin dihydrochalcone, acesulfam K, aspartame, cyclamate, saccharin, glycyrrhicine, alitame, monellin and sucralose.

In a preferred embodiment of the present invention, the at least one sugar alcohol is a mono- or disaccharide alcohol.

In a preferred embodiment of the present invention, the at least one sugar alcohol is selected from the group consisting of maltitol, xylitol, isomalt, which is a mixture of 1,6-GPS and 1,1-GPM of 43 to 57% 1,6-GPS and 57 to 43% 1,1-GPM, preferably a 1:1 mixture, sorbitol, erythritol, mannitol, lactitol, 1-O-α-D-Glucopyranosyl-D-sorbitol (1,1-GPS), 1-O-α-D-Glucopyranosyl-D-mannitol (1,1-GPM), 6-O-α-D-Glucopyranosyl-D-sorbitol (1,6-GPS), isomalt GS, which is a mixture of 72 to 78%, preferably 75%, 1,6-GPS and 22 to 28%, preferably 25% (all % given in weight of dry matter), 1,1-GPM, and a mixture of 1,1-GPM, 1,1-GPS and 1,6-GPS.

In a particularly preferred embodiment the sugar-alcohol is isomalt. In a further particularly preferred embodiment, the sugar-alcohol is isomalt GS.

In a preferred embodiment of the present invention, the first, the second or the first and second coating comprises 50 to 80 weight-% of the at least one sugar alcohol (based on dry weight of the product coating).

According to the invention, it is provided that the core, in particular the chewing gum core, can be produced by customary methods. After producing the product cores, in particular the chewing gum cores, the finished cores are, for the preparation of the first and/or second coating, preferably dragee-coated, with dragee-coating methods which are customarily used. In preferred embodiments, cores can be subjected according to the present invention to a soft dragee coating or a hard dragee coating. A "soft dragee coating" means the application of the coating ingredients, in particular the binding agent and the palatinose, optionally also the panning additive, dissolved or suspended in water to moving cores, in particular chewing gum cores, with, after each application, a powder of all or one of the coating ingredients being dispersed on to dry the coating layer, i.e. to bind the moisture, which regularly leads to a residual water content of 7 to 10% (without consideration of crystal water content) and a soft coating. This type of dragee coating produces a soft dragee coating. A "hard dragee coating" means, as in the soft dragee coating, the application of the coating ingredients dissolved or suspended in water onto moving cores, optionally with coating ingredients powder being applied, but rather the non-aqueous constituents being dried on using hot, warm or cold air, which leads to a residual water content of 1-5% (without consideration of crystal water content) and a hard coating. As in the soft dragee coating, preferably a multiplicity of different individual applications, called repetitions or cycles, are carried out, between which drying is performed with warm air or cold air, so that dragee coatings of different thicknesses can be produced. The hard dragee coating method can also be carried out using two or more different coating solutions which are applied successively.

In a preferred embodiment of the inventive method, the core, in particular chewing gum core, is coated with the first and/or second coating by means of at least one hard-dragee-coating step, with the layer comprising the palatinose and the binding agent. The hard-dragee coating step comprises applying a solution or suspension which comprises at least one binding agent, palatinose and optionally at least one panning additive, and subsequently drying the applied solution or suspension with an air stream.

In a further preferred embodiment of the inventive method the core, in particular chewing gum core, is coated with the first and/or second coating by means of at least one soft dragee-coating step, with the layer comprising the palatinose and the binding agent. The soft-dragee coating step comprises applying a solution or suspension which comprises at least one binding agent and the palatinose, optionally also at least one panning additive, and dusting the applied solution or suspension with a powder of palatinose and/or the binding agent. In a preferred embodiment, the applied solution or suspension comprises the total amount of the binding agent or a part thereof. In a preferred embodiment the binding agent is completely or partially introduced into the solution or suspension and is applied to the cores to be dragee-coated. In a further preferred embodiment, the powder comprises the total amount of the binding agent or a part thereof. In a preferred embodiment, the binding agent is completely or partially used as powder for dusting the solution or suspension applied to the core.

The present invention also relates to a method for the preparation of a comestible with a first, preferably also with a second coating, preferably of a coated product according to the above, wherein the comestible comprises a core and a first coating and the first coating comprises at least the coating ingredients at least one binding agent, palatinose and optionally at least one panning additive, which process comprises applying a coating medium comprising at least partially the coating ingredients to said core, and drying the coated product, so as to obtain a first coating, which comprises 5 to 10 weight-% binding agent, 25 to 95 weight-% of palatinose and 0 to 70 weight-% (each based on total dry weight of first coating) of at least one panning additive. Preferably, the method also comprises the application of a second liquid medium comprising at least partially the coating ingredients to said core which comprises the first coating and drying the coated products so as to obtain a second coating, which comprises 11 to 20 weight-% binding agent, 25 to 89 weight-% of palatinose and 0 to 70 weight-% (each based on total dry weight of first coating) of at least one panning additive.

In a preferred embodiment of the present method, the drying is done by subjecting the coated product to air, in particular an air stream, preferably a constant air stream, having a temperature of 20°C to 80°C, preferably 30°C to 80°C, in particular 25°C to 45°C.

In a preferred embodiment of the present method, the drying is done by adding part of the coating ingredients in dry and powdered form to the coated products during or after step b) for the first coating and/or, for the second coating, step c).

Preferably, the solid content of the first and optionally second liquid medium is from 30 to 90%, preferably 50 to 75% (weight-% based on total weight of liquid medium).

In a preferred embodiment, the first and optionally second liquid medium has a temperature from 50 to 85°C, preferably 65°C to 75°C.

In a preferred embodiment of the present method, during application of the first and/or second liquid medium the coated products are subjected to a distribution step, wherein the coated products are agitated to allow a homogenous distribution of the coating medium on the product core.

In a preferred embodiment of the present method all coating ingredients are applied in form of the first and optionally the second liquid medium, in particular as a coating suspension or a coating solution.

In a preferred embodiment of the present method, a part of the coating ingredients is applied in form of a liquid coating medium and a further part is applied in dry and powdered form.

In a preferred embodiment of the present method, all or part of the palatinose of the coating is added in dry and powdered form.

In a preferred embodiment of the present method, at least a part of the binding agent is added in dry and powdered form.

In a preferred embodiment of the present method, preferably in a hard coating method, the application of the first, and optionally of the second, liquid medium and the subsequent drying are repeated one or more times (each time also being called a cycle), preferably 80 to 120 times. A preferred hard coating method of the present invention results in a residual water content of the coating from preferably 1 to 5% (by weight, without consideration of crystal water content) In a preferred embodiment of the present invention, preferably in a soft coating method, the application of the first, and optionally of the second, liquid medium and the subsequent drying are repeated 3 to 10 times. A preferred soft coating method of the present invention results in a residual water content of the coating from preferably 7 to 10% (by weight, without consideration of crystal water content).

In a furthermore preferred embodiment of the present invention, the application of the first liquid medium and the subsequent drying, that means steps b) and d), are repeated 100 to 200 times, i.e. in 100 to 200 cycles. In a further preferred embodiment wherein a second coating is applied, the application of the second liquid medium and the subsequent drying is repeated 80 to 120 times, i.e. 80 to 120 cycles. However, it is also preferred to repeat the application of the second liquid medium and the subsequent drying 100 to 200 times, that means to carry out 100 to 200 cycles.

In a furthermore preferred embodiment, in which a particularly high number of cycles is conducted, namely 100 to 200 cycles, the residual water content of the coating in a hard coating method of the present invention is a water content of 1.5 to 5.5%, preferably 3 to 7% (each by weight, without consideration of crystal water content). In a furthermore preferred embodiment of the present invention, in which a particularly high number of cycles, namely 100 to 200 cycles, is conducted, a soft coating method of the present invention provides a soft coating with a residual water content from 7.5 to 10.5%, preferably 9 to 12% (each by weight, without consideration of crystal water content).

In a preferred embodiment of the present method, the coating ingredients applied in dry and powder form represent 30 to 75% by weight, preferably 40 to 75% by weight of the overall amount of the coating ingredients of the first, and optionally of the second, coating (each separately based on total dry weight of the first and, if present, of the second coating).

In a preferred embodiment of the present method comprising at least one repetition of the coating and drying steps, i.e. two cycles, either in preparing the first or the second or both coatings, it is foreseen that in a first phase of the method, the coating medium is applied and the drying is done, the latter by adding part of the coating ingredients in dry and powdered form to the coated products one or more repeated times and wherein in a second phase of the method the first, and optionally the second liquid coating medium is applied to the coated products and dried by subjecting the coated products to drying air one or more repeated times without the addition of dry and powdered coating ingredients. It is also possible to reverse the order of the first and second phase or to alternate the cycles.

In a preferred embodiment of the present method, the drying is done both by subjecting the coated product to air, preferably an air stream, having a temperature of 20 to 80°C and by adding part of the coating ingredients in dry and powdered form to the coated products.

In a preferred embodiment of the present method, the coating and drying steps are repeated 5 to 50 times.

In a furthermore preferred embodiment, the present invention relates to a method for preparing the above-identified coated comestible comprising a core and a first, and optionally second, coating, which comprises in a first process step applying a first liquid medium, for instance a coating solution or a coating suspension, comprising a first part of the coating ingredients to the core for the purpose of applying one layer and then, in a second process step dusting with a second part of the coating ingredients, i.e. one or more of the coating ingredients in powder form, and drying, preferably with air, in particular an air stream, at 20 to 80°C, the coated cores, wherein the second part of the ingredients, in particular the palatinose, the at least one binding agent and optionally at least one panning additive, are applied in an amount from 30% to 75%, preferably 30% to 60%, preferably 40% to 55%, based on total solid content of the first coating, and wherein preferably said steps are optionally repeated one or more times in alternation, preferably five to 50 times In a preferred embodiment in which a second coating is desired, said series of process steps has to be conducted with a second liquid medium and the corresponding dry charge of coating ingredients.

In a furthermore preferred embodiment of the present invention it is foreseen that after conducting the cycles and thereby applying the first and optionally second coating a final finishing step, in particular a step to apply at least one film forming agent, is conducted so as to obtain by the use of at least one film-forming agent a film coating on the coated cores. Preferably, such a film coating may also comprise at least one food color.

The present invention also relates to coated comestibles prepared according to any one of the above-identified processes.

Further preferred embodiments of the present invention are the subject-matter of the subclaims.

### Examples

The invention will now be described in more detail by way of the non-limiting examples.

### Example 1 Comestible with a first coating

### 1a) Recipe of coating with color:

| | |
|---|---|
| Palatinose | 54% |
| Gum arabic (50% solution) | 10% |
| TiO₂ | 0,6% |
| Water | 35.4% |
| Cores: | 6 - 8 kg chewing gum cores |

Temperature of suspension for coating: 70°C
The coating process is conducted in a driacouter 500/600 Vario.
drying air: 25-30°C,
20% relative humidity at 25°C, 5m³/min
Coating time 3hr, the coating represents about 30% of total dry weight of comestible

If desired, powdered palatinose may be added to the coated cores during the coating process.

The coating of the above prepared coated chewing gum comprises 8,4 weight-% of the binding agent gum arabic (based on total dry weight of the coating) and about 90,6 weight-% palatinose (based on total dry weight of the coating). In contrast to chewing gums coated with a coating comprising less than 5 weight-% gum arabic (based on total dry weight of the coating) and having the same organoleptic and technological properties as the presently obtained coated products, the comestibles according to the present example show reduced chipping and a more elastic coating.

### 1 b) Recipe of coating without color:

Alternatively, a coated comestible may be prepared with the same recipe of 1a), except that TiO₂ as a food color is omitted. Using the same process conditions as identified in 1a), a coated comestible without food color and having a first coating is obtained, which has the same organoleptic and technological properties as a conventionally prepared coated product, but which shows reduced chipping and a more elastic coating.

### Example 2 Comestibles with a first and second coating

### Recipe of coating:

### 1) First Coating (White):

| | | |
|---|---|---|
| Syrup 1: | Palatinose | 60% |
| | Gum arabic (50% solution) | 10% |
| | TiO₂ | 1% |
| | Water | 29% |
| | Cores: | 9 kg |

Coater: Driacoater 500/600 Vario
Temperature of coating syrup: 70°C
Drying air: 25 -30 °C
20 % r.h. (relative humidity) at 25°C, 5m³/min
63 Layers, about 25% coating
Powder palatinose was added during the first two cycles (per cycle: 50g palatinose) of the coating process for the first coating.
Coating time: 113 min

### Coating Process

| Phase | Number of cycles | Amount of syrup [g] |
|---|---|---|
| 1 | 1 | 70 |
| 2 | 5 | 60 |
| 3 | 5 | 70 |
| 4 | 50 | 80 |
| 5 | 2 | 50 |

### 2a) Second coating (Color Carmoisine):

Cores: 6 kg of white coated product

| | | |
|---|---|---|
| Syrup 2: | Palatinose | 55% |
| | Gum arabic (50% solution) | 20% |
| | Water | 25% |
| | | |
| Additional: | Color (Eurocert Carmoisine, 311804 SAM, Sensient) | 0,02% |

20 Layers:
Same conditions as first coating
45 minutes (including waxing)

### Coating Process (Color Carmoisine)

| Phase | Number of cycles | Amount of syrup [g] |
|---|---|---|
| 1 | 5 | 70 |
| 2 | 15 | 60 |
| 3 | Waxing | |

### 2b) Second coating (Color Allura Red):

Alternatively to the second coating 2a) as described in Example 2a), a second coating with another color may be used.
Cores: 6 kg of white coated product

| | | |
|---|---|---|
| Syrup 2: | Palatinose | 55% |
| | Gum arabic (50% solution) | 20% |
| | Water | 25% |
| | | |
| Additional: | Color (Allura Red, 952380, Sensient) | 0,12% |

30 Layers:
Same conditions as first coating
60 minutes (including waxing)

### Coating Process (Color Allura Red)

| Phase | Number of cycles | Amount of syrup [g] |
|---|---|---|
| 1 | 5 | 70 |
| 2 | 25 | 60 |
| 3 | Waxing | |

The number of layers depends on the desired color intensity. Both products of 2a) and 2b) show homogenous color distribution and excellent crunch.

### Example 3 Comestibles with a film coated first coating

| **Recipe for the first coating** | | |
|---|---|---|
| 60 % | Palatinose | 75°C |
| 7 % | Gum arabic Sol. (50 %) | |
| 1 % | Titaniumdioxide | |
| 32 % | Water | |

Cores: 7,5 kg chewing gum cores

### Coating Process

| **Phase** | **Syrup** | **Distribution (coating) time** | **Drying time** | **No. of cycles** |
|---|---|---|---|---|
| 1) | 30 g | 0,3 min | 0,7 min | × 15 |
| 2) | 40 g | 0,4 min | 0,8 min | × 15 |
| 3) | 50 g | 1 min | 0,5 min | × 110 |
| 4) | 40 g | 1 min | 0,4 min | × 10 |
| 5) | 40 g | 3 min | / | × 1 |
| | | | | 151 cycles |

Subsequently, a waxing step for obtaining a white final product, or alternatively as another finishing step, a film coating step with the following recipe is conducted:

### Recipe

| | | | |
|---|---|---|---|
| Sepifilm 050 | 180 g | 25°C | spraying Rate 25 g/min |
| Water | 1320 g | | |
| Ethanol | 15 g | | |
| Brillant Blue (Sensient Colour) | 9 g | | |
| Process time: 60 min | | | |

## Claims

1. A process for coating comestibles comprising the steps of
a) providing cores of comestibles to be coated and
b) applying to the cores a first liquid medium comprising palatinose and a binding agent so as to obtain at least one layer of a first coating, wherein said first coating comprises at least 5 weight-% of the binding agent (based on the total dry weight of the first coating) and wherein the binding agent is a water soluble hydrocolloid.

2. The process of claim 1, wherein in a process step c) subsequent to step b) a second liquid medium comprising palatinose and a binding agent is applied to the first coating so as to obtain at least one layer of a second coating and wherein in the second coating the amount of the binding agent is higher than in the first coating.

3. The process of claim 1 or 2, wherein the amount of the binding agent in the first coating is 5 to 10 weight-%.

4. The process according to any one of the preceding claims, wherein the amount of the binding agent in the second coating is 11 to 20 weight-%.

5. The process according to any one of the preceding claims, wherein the first liquid medium is free of food colours.

6. The process according to any one of the preceding claims, wherein the second liquid medium comprises at least one food colour.

7. The process according to any one of the preceding claims, wherein the first liquid medium comprises no food colour, while the second liquid medium contains at least one food colour.

8. The process according to any one of-the preceding claims, wherein the process further comprises the steps of
d) evaporating water from the at least one layer of the first coating obtained in step b) and
e) repeating steps b) and d) to build up more than one layer of the first coating.

9. The process according to any one of the preceding claims, wherein the process further comprises the steps of
f) evaporating water from the at least one layer of the second coating obtained in step c) and
g) repeating steps c) and f) to build up more than one layer of the second coating.

10. The process according to any one of the preceding claims, wherein during or after step b) powdered palatinose is applied over the at least one layer of the first coating.

11. The process according to any one of the preceding claims 2 to 10, wherein during or after step c) powdered palatinose is applied over the at least one layer of the second coating.

12. The process according to any one of the preceding claims 10 or 11, which comprises repeating steps b) and/or c) and the addition of the powdered palatinose so as to build up more than one layer of the first and/or second coating.

13. The process according to any one of the preceding claims, wherein the binding agent is gum arabic, gelatine, gum tragacanth, locust bean gum, guar gum, vegetable gums, like alginates, maltodextrines, corn syrup, pectin, starch, modified starch, corn starch, potato starch, rice starch, cellulose-type materials, carboxymethylcellulose, hydroxymethylcellulose, xanthan or mixtures thereof.

14. The process according to any one of the preceding claims, wherein the cores are filled chewing gum centres, non-filled chewing gum centres, tablets, soft caramels, hard caramels, chewing can-dies, boiled candies, chocolate, jelly gums, nuts or marshmallows.

15. The process according to any one of claims 1 to 14, wherein in step b) at least one panning additive is contained in the first liquid medium.

16. The process according to any one of claims 2 to 14, wherein in step c) at least one panning additive is contained in the second liquid medium.

17. The process according to any one of claims 8 to 16, wherein steps b) and d) are repeated 100 to 200 times.

18. The process according to any one of claims 9 to 17, wherein steps c) and f) are repeated 100 to 200 times.

19. The process according to any one of claims 1 to 18, wherein after building up the first, and if present optionally the second coating, at least one film-forming agent is applied on the coated comestible so as to obtain a film coated comestible.

20. The process according to claim 19, wherein the film forming agent and at least a food color is applied so as to obtain a colored film coated comestible.

21. Coated comestibles comprising a core of a comestible and a first coating, wherein the first coating comprises palatinose and at least 5 weight-% (based on the total dry weight of the first coating) of a binding agent and wherein the binding agent is a water soluble hydrocolloid.

22. The coated comestible according to claim 21, which comprises a first coating comprising palatinose and a binding agent and a second coating comprising palatinose and a binding agent, wherein the amount of the binding agent in the second coating is higher than in the first coating.

23. The coated comestible according to claim 21 or 22, wherein the first coating is free of food colours, while the second coating comprises at least one food colour.

24. The coated comestible according to any one of claims 21 to 23, wherein the first coating comprises 5 to 10 weight-% of the binding agent (based on total dry weight of the first coating) and the second coating comprises 11 to 20 weight-% (based on total dry weight of the second coating) of the binding agent.

25. The coated comestible according to any one of claims 21 to 24, wherein the first coating comprises at least one panning additive or wherein the second coating comprises at least one panning additive.

26. Coated comestibles prepared according to any one of claims 1 to 20.

## Patentansprüche

1. Verfahren zur Beschichtung von Verzehrprodukten umfassend die folgenden Schritte:
a) Bereitstellen von verzehrbaren Kernen, die beschichtet werden sollen, und
b) Aufbringen eines ersten, Palatinose und ein Bindemittel umfassenden flüssigen Mediums auf die Kerne, um zumindest eine Schicht einer ersten Beschichtung zu erhalten, wobei die erste Beschichtung zumindest 5 Gew.-% des Bindemittels (bezogen auf das Gesamttrockengewicht der ersten Beschichtung) umfasst und wobei das Bindemittel ein wasserlösliches Hydrokolloid ist.

2. Verfahren nach Anspruch 1, wobei in einem auf Schritt b) folgenden Verfahrensschritt c) ein zweites, Palatinose und ein Bindemittel umfassendes flüssiges Medium auf die erste Beschichtung aufgetragen wird, um zumindest eine Schicht einer zweiten Beschichtung zu erhalten und wobei die Menge an Bindemittel in der zweiten Beschichtung höher als in der ersten Beschichtung ist.

3. Verfahren nach Anspruch 1 oder 2, wobei die Menge des Bindemittels in der ersten Beschichtung 5 bis 10 Gew.-% beträgt.

4. Verfahren nach einem der vorhergehenden Ansprüche, wobei die Menge des Bindemittels in der zweiten Beschichtung 11 bis 20 Gew.-% beträgt.

5. Verfahren nach einem der vorhergehenden Ansprüche, wobei das erste flüssige Medium frei von Lebensmittelfarbstoffen ist.

6. Verfahren nach einem der vorhergehenden Ansprüche, wobei das zweite flüssige Medium zumindest einen Lebensmittelfarbstoff umfasst.

7. Verfahren nach einem der vorhergehenden Ansprüche, wobei das erste flüssige Medium keinen Lebensmittelfarbstoff enthält, während das zweite flüssige Medium zumindest einen Lebensmittelfarbstoff enthält.

8. Verfahren nach einem der vorhergehenden Ansprüche, wobei das Verfahren des Weiteren die folgenden Schritte umfasst:
d) Verdampfen von Wasser aus der in Schritt b) erhaltenen zumindest einen Schicht der ersten Beschichtung, und
e) Wiederholen der Schritte b) und d), um mehr als eine Schicht der ersten Beschichtung aufzubauen.

9. Verfahren nach einem der vorhergehenden Ansprüche, wobei das Verfahren des Weiteren die folgenden Schritte umfasst:
f) Verdampfen von Wasser aus der in Schritt c) erhaltenen zumindest einen Schicht der zweiten Beschichtung, und
g) Wiederholen der Schritte c) und f), um mehr als eine Schicht der zweiten Beschichtung aufzubauen.

10. Verfahren nach einem der vorhergehenden Ansprüche, wobei während oder nach Schritt b) pulverförmige Palatinose über die zumindest eine Schicht der ersten Beschichtung aufgetragen wird.

11. Verfahren nach einem der vorhergehenden Ansprüche 2 bis 10, wobei während oder nach Schritt c) pulverförmige Palatinose über die zumindest eine Schicht der zweiten Beschichtung aufgetragen wird.

12. Verfahren nach einem der vorhergehenden Ansprüche 10 oder 11, welches das Wiederholen der Schritte b) und/oder c) und die Zugabe der pulverförmigen Palatinose umfasst, um mehr als eine Schicht der ersten und/oder zweiten Beschichtung aufzubauen.

13. Verfahren nach einem der vorhergehenden Ansprüche, wobei es sich bei dem Bindemittel um Gummi arabicum, Gelatine, Traganthgummi, Johannisbrotkernmehl, Guargummi, pflanzliche Gummis wie Alginate, Maltodextrine, Maissirup, Pektin, Stärke, modifizierte Stärke, Maisstärke, Kartoffelstärke, Reisstärke, zelluloseartige Materialien, Carboxymethylzellulose, Hydroxymethylzellulose, Xanthan oder Mischungen davon handelt.

14. Verfahren nach einem der vorhergehenden Ansprüche, wobei die Kerne gefüllte Kaugummikerne, ungefüllte Kaugummikerne, Tabletten, Weichkaramellen, Hartkaramellen, Kaubonbons, gekochte Bonbons, Schokolade, Gelee-Gummis, Nüsse oder Marshmallows sind.

15. Verfahren nach einem der Ansprüche 1 bis 14, wobei in Schritt b) zumindest ein Beschichtungsadditiv in dem ersten flüssigen Medium enthalten ist.

16. Verfahren nach einem der Ansprüche 2 bis 14, wobei in Schritt c) zumindest ein Beschichtungsadditiv in dem zweiten flüssigen Medium enthalten ist.

17. Verfahren nach einem der Ansprüche 8 bis 16, wobei die Schritte b) und d) 100 bis 200 MaI wiederholt werden.

18. Verfahren nach einem der Ansprüche 9 bis 17, wobei die Schritte c) und f) 100 bis 200 MaI wiederholt werden.

19. Verfahren nach einem der Ansprüche 1 bis 18, wobei nach dem Aufbau der ersten, und falls vorhanden gegebenenfalls auch der zweiten Beschichtung zumindest ein filmbildendes Mittel auf das beschichtete Verzehrprodukt aufgebracht wird, um ein filmbeschichtetes Verzehrprodukt zu erhalten.

20. Verfahren nach Anspruch 19, wobei das filmbildende Mittel und zumindest ein Lebensmittelfarbstoff aufgebracht werden, um ein gefärbtes filmbeschichtetes Verzehrprodukt zu erhalten.

21. Beschichtetes Verzehrprodukt, umfassend einen essbaren Kern und eine erste Beschichtung, wobei die erste Beschichtung Palatinose und zumindest 5 Gew.-% (bezogen auf das Gesamttrockengewicht der ersten Beschichtung) eines Bindemittels umfasst, und wobei das Bindemittel ein wasserlösliches Hydrokolloid ist.

22. Beschichtetes Verzehrprodukt nach Anspruch 21, welches eine Palatinose und ein Bindemittel umfassende erste Beschichtung und eine Palatinose und ein Bindemittel umfassende zweite Beschichtung umfasst, wobei die Menge an Bindemittel in der zweiten Beschichtung höher als in der ersten Beschichtung ist.

23. Beschichtetes Verzehrprodukt nach Anspruch 21 oder 22, wobei die erste Beschichtung keine Lebensmittelfarbstoffe enthält, während die zweite Beschichtung zumindest einen Lebensmittelfarbstoff umfasst.

24. Beschichtetes Verzehrprodukt nach einem der Ansprüche 21 bis 23, wobei die erste Beschichtung 5 bis 10 Gew.-% des Bindemittels (bezogen auf das Gesamttrockengewicht der ersten Beschichtung) umfasst und die zweite Beschichtung 11 bis 20 Gew.-% (bezogen auf das Gesamttrockengewicht der zweiten Beschichtung) des Bindemittels umfasst.

25. Beschichtetes Verzehrprodukt nach einem der Ansprüche 21 bis 24, wobei die erste Beschichtung zumindest ein Beschichtungsadditiv umfasst oder wobei die zweite Beschichtung zumindest ein Beschichtungsadditiv umfasst.

26. Beschichtete Verzehrprodukte, die nach einem der Ansprüche 1 bis 20 hergestellt sind.

## Revendications

1. Procédé d'enrobage de produits comestibles comportant les étapes consistant à
a) fournir des coeurs de produits comestibles destinés à être enrobés et
b) appliquer aux coeurs un premier milieu liquide comprenant de la palatinose et un liant de sorte à obtenir au moins une couche d'un premier enrobage, ledit premier enrobage comprenant au moins 5 % en poids du liant (sur la base du poids sec total du premier enrobage) et le liant étant un hydrocolloïde soluble dans l'eau.

2. Procédé de la revendication 1, dans lequel dans une étape de procédé c) ultérieure à l'étape b) un deuxième milieu liquide comprenant de la palatinose et un liant est appliqué au premier enrobage de sorte à obtenir au moins une couche d'un deuxième enrobage et dans lequel dans le deuxième enrobage la quantité de liant est supérieure à celle présente dans le premier enrobage.

3. Procédé de la revendication 1 ou 2, dans lequel la quantité de liant dans le premier enrobage est de 5 à 10 % en poids.

4. Procédé selon l'une quelconque des revendications précédentes, dans lequel la quantité de liant dans le deuxième enrobage est de 11 à 20 % en poids.

5. Procédé selon l'une quelconque des revendications précédentes, dans lequel le premier milieu liquide est exempt de colorants alimentaires.

6. Procédé selon l'une quelconque des revendications précédentes, dans lequel le deuxième milieu liquide comporte au moins un colorant alimentaire.

7. Procédé selon l'une quelconque des revendications précédentes, dans lequel le premier milieu liquide ne contient pas de colorant alimentaire, tandis que le deuxième milieu liquide contient au moins un colorant alimentaire.

8. Procédé selon l'une quelconque des revendications précédentes, dans lequel le procédé comporte en outre les étapes consistant à
d) faire évaporer l'eau de la au moins une couche du premier enrobage obtenu à l'étape b) et
e) répéter les étapes b) et d) pour former plus d'une couche du premier enrobage.

9. Procédé selon l'une quelconque des revendications précédentes, dans lequel le procédé comporte en outre les étapes consistant à
f) faire évaporer l'eau de la au moins une couche du deuxième enrobage obtenu à l'étape c) et
g) répéter les étapes c) et f) pour former plus d'une couche du deuxième enrobage.

10. Procédé selon l'une quelconque des revendications précédentes, dans lequel, durant ou après l'étape b), de la palatinose en poudre est appliquée sur la au moins une couche du premier enrobage.

11. Procédé selon l'une quelconque des revendications précédentes 2 à 10, dans lequel, durant ou après l'étape c), de la palatinose en poudre est appliquée sur la au moins une couche du deuxième enrobage.

12. Procédé selon l'une quelconque des revendications précédentes 10 ou 11, lequel comprend la répétition des étapes b) et/ou c) et l'ajout de la palatinose en poudre afin de former plus d'une couche du premier et/ou du deuxième enrobage.

13. Procédé selon l'une quelconque des revendications précédentes, le liant étant gomme arabique, gélatine, gomme adragante, farine de graines de caroube, gomme de guar, gommes végétales, telles qu'alginates, maltodextrines, sirop de maïs, pectine, amidon, amidon modifié, amidon de maïs, fécule de pomme de terre, amidon de riz, matières de type cellulose, carboxyméthylcellulose, hydroxyméthylcellulose, gomme xanthane où mélanges de ceux-ci.

14. Procédé selon l'une quelconque des revendications précédentes, dans lequel les coeurs sont des centres de gomme à mâcher remplis, centres de gomme à mâcher non remplis, tablettes, caramels mous, caramels durs, confiseries à mâcher, confiseries cuites, chocolat, gommes à base de gélifiants, noix et guimauve.

15. Procédé selon l'une quelconque des revendications 1 à 14, dans lequel, à l'étape b), au moins un additif d'enrobage est contenu dans le premier milieu liquide.

16. Procédé selon l'une quelconque des revendications 2 à 14, dans lequel, à l'étape c), au moins un additif d'enrobage est contenu dans le deuxième milieu liquide.

17. Procédé selon l'une quelconque des revendications 8 à 16, dans lequel les étapes b) et d) sont répétées 100 à 200 fois.

18. Procédé selon l'une quelconque des revendications 9 à 17, dans lequel les étapes c) et f) sont répétées 100 à 200 fois.

19. Procédé selon l'une quelconque des revendications 1 à 18, dans lequel après la formation du premier et, le cas échéant, facultativement le deuxième enrobage, au moins un agent filmogène est appliqué sur le produit comestible enrobé de sorte à obtenir un produit comestible pelliculé.

20. Procédé selon la revendication 19, dans lequel l'agent filmogène et au moins un colorant alimentaire sont appliqués de sorte à obtenir un produit comestible pelliculé coloré.

21. Produit comestible enrobé comprenant un coeur de produit comestible et un premier enrobage, dans lequel le premier enrobage comprend de la palatinose et au moins 5 % en poids (sur la base du poids sec total du premier enrobage) d'un liant et dans lequel le liant est un hydrocolloïde soluble dans l'eau.

22. Produit comestible enrobé selon la revendication 21, lequel comprend un premier enrobage comprenant de la palatinose et un liant et un deuxième enrobage comprenant de la palatinose et un liant, la quantité de liant dans le deuxième enrobage étant supérieure à celle présente dans le premier enrobage.

23. Produit comestible enrobé selon la revendication 21 ou 22, dans lequel le premier enrobage est exempt de colorants alimentaires, tandis que le deuxième enrobage comprend au moins un colorant alimentaire.

24. Produit comestible enrobé selon l'une quelconque des revendications 21 à 23, dans lequel le premier enrobage comprend 5 à 10 % en poids de liant (sur la base du poids sec total du premier enrobage) et le deuxième enrobage comprend 11 à 20 % en poids de liant (sur la base du poids sec total du deuxième enrobage).

25. Produit comestible enrobé selon l'une quelconque des revendications 21 à 24, dans lequel le premier enrobage comprend au moins un additif d'enrobage ou dans lequel le deuxième enrobage comprend au moins un additif d'enrobage.

26. Produits comestibles enrobés préparés selon l'une quelconque des revendications 1 à 20.
